# FASCICULE DE BREVET EUROPEEN

(11) **EP 2 051 844 B1**
(45) Date de publication et mention de la délivrance du brevet: **01.12.2010**
(21) Numéro de dépôt: 07823341.8
(22) Date de dépôt: 26.07.2007
(51) Int. Cl.: B29C 53/04, B32B 1/04

(54) **PLAQUE MUNIE D'AU MOINS UN BORD RECOURBÉ ET PROCÉDÉ DE FABRICATION D'UNE TELLE PLAQUE**
PLATTE MIT MINDESTENS EINER GEKRÜMMTEN KANTE UND HERSTELLUNGSVERFAHREN FÜR EINE SOLCHE PLATTE
PLATE EQUIPPED WITH AT LEAST ONE CURVED EDGE AND MANUFACTURING METHOD FOR SUCH A PLATE

(30) Priorité: 11.08.2006 FR 0607282
(43) Date de publication de la demande: 29.04.2009
(73) Titulaire: ITW Gunther, 70800 Fontaine Les Luxeuil (FR)
(72) Inventeur: DELAFON, Olivier, 70300 Luxeuil Les Bains (FR); RACHIDIA, Abderrahim, 70300 Luxeuil Les Bains (FR)
(74) Mandataire: Hammond, William
(86) Numéro de dépôt international: PCT/FR2007/001284
(87) Numéro de publication internationale: WO 2008/020120

(56) Documents cités:
- EP-A- 1 201 419
- FR-A1- 2 528 350
- US-A1- 3 416 991

## Description

L'invention concerne un procédé de fabrication de plaques munies d'au moins un bord recourbé.

L'invention concerne aussi une plaque à bord recourbé en tant que telle, en particulier pour être utilisée comme support de transport pour un élévateur à fourches du type chariot ou autre.

Il est parfaitement connu de transporter des marchandises ou des produits d'un lieu d'entreposage à un autre, ou d'un lieu d'entreposage à un véhicule, ou inversement, au moyen de palettes en bois et d'élévateurs à fourches, tels que des chariots par exemple, les marchandises étant disposées sur lesdites palettes.

En vue de limiter l'utilisation du bois et/ou de rechercher un gain de place et/ou de poids, on a cherché à remplacer la palette classique en bois pourtant devenue un moyen qui pouvait paraître incontournable.

C'est ainsi que les inventeurs ont cherché des moyens nouveaux sous forme de plaques à bords recourbés afin de pouvoir introduire aisément les fourches des élévateurs sous lesdites plaques.

Pour obtenir des plaques de ce type, on peut imaginer différentes techniques du type rainurage par exemple afin de permettre le recourbement des bords, mais les inventeurs ont découvert un procédé tout à fait original et surprenant afin d'obtenir un tel résultat.

Le procédé de fabrication de plaques munies d'au moins un bord recourbé selon l'invention part d'une matière qui est extrudée à chaud entre deux feuilles, l'ensemble étant ensuite calandré, par exemple comme décrit dans le document FR 2 528 350 A.

Le procédé selon l'invention est notamment remarquable en ce qu'on utilise deux feuilles de largeurs différentes et que la matière est extrudée de manière à recouvrir sensiblement toute la surface de la feuille plus large en débordant de la feuille plus étroite sur au moins un côté constituant ainsi au moins un bord longitudinal formé par la feuille plus large recouverte seulement de l'extrudat, ledit bord se recourbant alors sans autre intervention par contrainte mécanique naturelle au cours de la fabrication, de manière concave du côté de la feuille moins large.

L'invention préconise en outre un procédé en continu comme dans le document précité, dans lequel les deux feuilles de largeurs différentes sont des feuilles déroulées en bandes, l'ensemble étant tronçonné transversalement après l'opération de calandrage.

Par exemple, au moins le bord formé par la feuille plus large recouverte seulement de l'extrudat est rogné mécaniquement pour former un bord régulier et/ou dimensionner plus précisément le produit fini.

Selon un mode de réalisation, les deux feuilles présentent le même axe central longitudinal de manière à former deux bords longitudinaux recourbés.

Selon différents modes de réalisation ou particularités, le calandrage s'effectue à température régulée et/ou l'ensemble est refroidi par air après calandrage et/ou l'extrudat provient d'un mélange thermoplastique et/ou les feuilles sont des feuilles de papier résistant.

L'invention concerne aussi, bien entendu, et de manière générale en tant que telle une plaque munie d'au moins un bord recourbé, constituée par un noyau de matière thermoplastique pris en sandwich entre deux feuilles, qui est remarquable en ce que l'une des feuilles est moins large de telle sorte que la matière thermoplastique recouvre toute la surface de la feuille plus large en débordant de la feuille moins large sur au moins un côté constituant ainsi au moins un bord longitudinal formé par la feuille plus large recouverte seulement de la matière thermoplastique, ledit bord étant recourbé de manière concave du côté de la feuille moins large.

Comme déjà dit, une application particulièrement avantageuse d'une plaque selon l'invention est une utilisation comme plaque support de transport pour élévateur à fourches, le ou les bords recourbés favorisant l'introduction desdites fourches sous ladite plaque.

Toutefois, l'application précitée ne doit pas être restrictive, l'invention concernant toutes les utilisations d'une telle plaque munie d'au moins un bord recourbé.

L'invention sera bien comprise à la lecture de la description qui va suivre et qui se réfère aux dessins annexés dans lesquels :
- la figure 1 montre schématiquement une chaîne de fabrication qui permet de décrire le procédé selon l'invention,
- la figure 2 est une vue en plan de dessous du produit en sortie de chaîne,
- la figure 3 est une vue en plan de dessus du produit en sortie de chaîne,
- la figure 4 montre le produit fini en coupe transversale selon IV-IV de la figure 3,
- la figure 5 montre un produit fini de la même manière que la figure 4, mais selon un autre mode de réalisation.

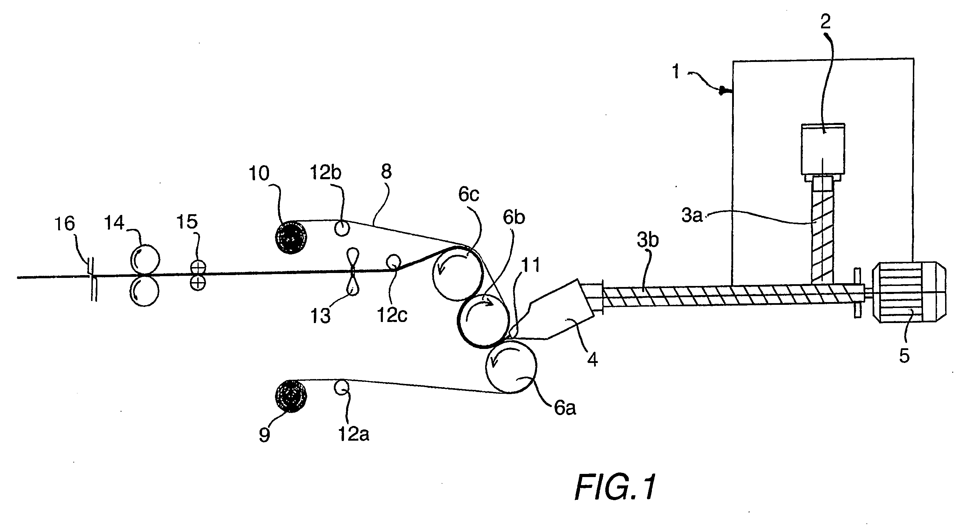

Sur la figure 1 on peut voir une chaîne de fabrication d'un produit selon l'invention, qui comporte une extrudeuse 1 munie d'une trémie d'alimentation 2, de deux vis forceuses 3a, 3b de transport du produit, d'une filière 4 et d'un moteur 5.

La filière 4 débouche entre deux rouleaux 6a, 6b d'une calandre munie d'un troisième rouleau 6c en sortie, ladite calandre étant par ailleurs régulée en température.

Les rouleaux 6a, 6b qui tournent en sens opposés et qui sont sensiblement en contact ou presque en contact entre eux, sont alimentés par des feuilles 7 et 8 en bandes provenant de bobines respectivement 9 et 10 de manière telle que la matière en sortie de filière ou extrudat 11 soit extrudée entre les deux feuilles 7 et 8 qui s'enroulent en partie autour des rouleaux 6a, 6b, comme le montre bien la figure 1.

De la sorte, on comprend que l'extrudat 11 est introduit entre les deux feuilles et qu'à la sortie du rouleau 6c de la calandre, on possède un complexe formé d'un extrudat 11 inséré entre deux feuilles 7 et 8.

La matière qui alimente la trémie 2 est par exemple une matière thermoplastique du type décrit dans le document cité ci-avant FR 2 528 350 A, mais il pourrait s'agir de toute autre matière susceptible d'être ramollie à chaud pour se durcir au moins partiellement en se refroidissant, cette matière pouvant même être au moins en partie naturelle.

Les feuilles 7 et 8 en bandes peuvent, par exemple, être en papier résistant du type kraft.

Le dispositif représenté, outre certains rouleaux de guidage tels que 12a, 12b, 12c, possède aussi en aval de la calandre et dans l'ordre, un système de refroidissement à air 13, un poste de tirage 14 du complexe, un poste de coupe 15 de rognures dont il sera question ci-après et un poste de tronçonnage transversal 16.

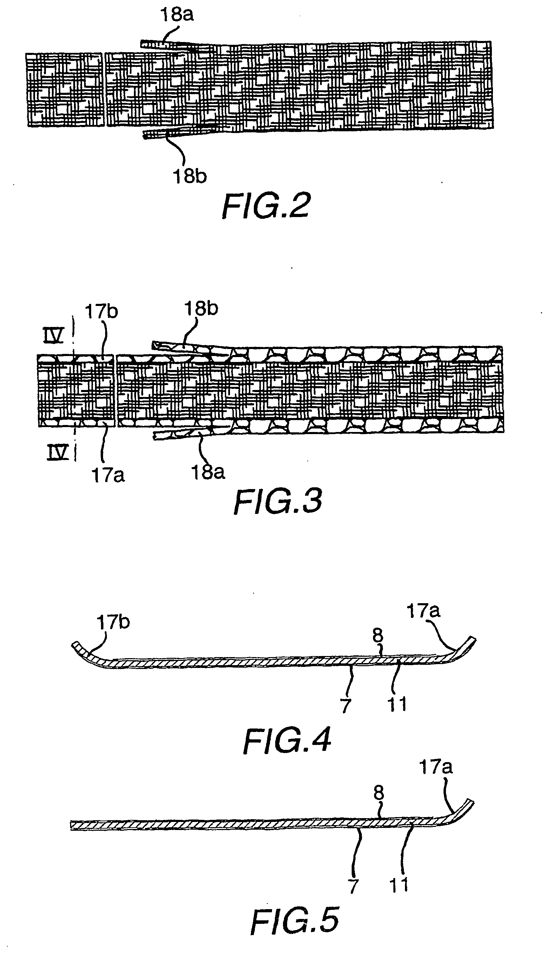

Comme le montrent bien en outre les figures 2 à 5, la feuillue 8 en bande est moins large que la feuille 7 en bande, les deux feuilles étant par ailleurs centrées sur les figures 3 et 4, c'est-à-dire avec superposition de leur axe longitudinal.

De la sorte, comme le montre bien la figure 3, l'extrudat 11 qui est disposé sur sensiblement toute la largeur de la feuille 7, déborde alors pour faire deux bords 17a, 17b formés de la feuille 7 recouverte seulement de l'extrudat 11, à l'exclusion donc d'une partie de la feuille 8.

L'extrudat 11 déjà refroidi en partie dans la calandre, puis dans le poste 13 solidifie le complexe ainsi formé dont les bords sont en partie rognés au poste de coupe 15 pour régulariser les bords et/ou dimensionner plus précisément le produit fini, les rognures 18a, 18b (figures 2 et 3) qui en résultent étant éliminées.

Du fait d'utiliser deux feuilles 7 et 8 de largeurs différentes, les bords 17a et 17b se recourbent comme le montre bien la figure 4 par contrainte mécanique sans autre intervention.

Cette contrainte mécanique surprenante provient peut-être d'une tension exercée sur les bords au cours du refroidissement de la matière, tension qui recourbe les bords de manière concave du côté de la feuille moins large 8, ce recourbement pouvant notamment s'observer en phase de refroidissement entre la sortie de la calandre (6a, 6b, 6c) et le poste de tirage 14.

Il est clair que si l'on choisit de réaliser qu'un seul bord recourbé, il suffit que l'un des bords de la feuille 8 soit ajusté avec le bord correspondant de la feuille 7 de telle sorte que l'on obtient un produit fini du type montré sur la figure 5 avec un seul bord 17a recourbé.

Le procédé qui vient d'être décrit concerne ici une fabrication en continu, mais on peut bien sûr prévoir une fabrication à l'unité, les feuilles dimensionnées à cet effet n'étant ni en bobine, ni tronçonnées.

Par ailleurs, comme déjà dit, l'invention concerne aussi chaque plaque en tant que telle, c'est-à-dire fabriquée comme décrit ci-avant, ou fabriquée éventuellement autrement, mais constituée comme précisé ci-avant, par un noyau de matière thermoplastique pris en sandwich entre deux feuilles, dans laquelle l'une des feuilles est moins large de telle sorte que la matière thermoplastique recouvre toute la surface de la feuille plus large en débordant de la feuille moins large sur au moins un côté constituant ainsi au moins un bord longitudinal formé par la feuille plus large recouverte seulement de la matière thermoplastique, ledit bord étant recourbé de manière concave du côté de la feuille moins large.

De même, de telles plaques peuvent avantageusement être utilisées comme supports de transport pour élévateurs à fourches, mais une telle utilisation n'est pas limitative.

## Revendications

1. Procédé de fabrication de plaques munies d'au moins un bord recourbé, à partir d'un extrudat (11) qui est extrudé à chaud entre deux feuilles (7,8), l'ensemble étant ensuite calandré, procédé **caractérisé en ce qu'**on utilise deux feuilles (7,8) de largeurs différentes et que la matière est extrudée de manière à recouvrir sensiblement toute la surface de la feuille (7) plus large en débordant de la feuille (8) plus étroite sur au moins un côté constituant ainsi au moins un bord (17a,17b) longitudinal formé par la feuille (7) plus large recouverte seulement de l'extrudat (11), ledit bord se recourbant alors sans autre intervention par contrainte mécanique naturelle au cours de la fabrication, de manière concave du côté de la feuille (7) moins large.

2. Procédé de fabrication en continu selon la revendication 1, **caractérisé en ce que** les deux feuilles (7,8) de largeurs différentes sont des feuilles déroulées en bandes, l'ensemble étant tronçonné (15) transversalement après l'opération de calandrage.

3. Procédé de fabrication selon l'une des revendications 1 et 2, **caractérisé en ce qu'**au moins le bord (17a,17b) formé par la feuille (7) plus large recouverte seulement de l'extrudat (11) est rogné mécaniquement (15) pour former un bord régulier et/ou dimensionner plus précisément le produit fini.

4. Procédé de fabrication selon l'une des revendications 1 ou 2, **caractérisé en ce que** les deux feuilles (7,8) présentent le même axe central longitudinal de manière à former deux bords longitudinaux recourbés (17a,17b).

5. Procédé de fabrication selon l'une des revendications 1 à 4, **caractérisé en ce que** le calandrage s'effectue à température régulée.

6. Procédé de fabrication selon l'une des revendications 1 à 4, **caractérisé en ce que** l'ensemble est refroidi (13) par air après calandrage.

7. Procédé de fabrication selon l'une des revendications 1 à 5, **caractérisé en ce que** l'extrudat (11) provient d'un mélange thermoplastique.

8. Procédé de fabrication selon l'une des revendications 1 à 6, **caractérisé en ce que** les feuilles (7,8) sont des feuilles de papier résistant.

9. Plaque munie d'au moins un bord recourbé, constituée par un noyau de matière thermoplastique (11) pris en sandwich entre deux feuilles (7,8), **caractérisée en ce que** l'une (8) des feuilles est moins large de telle sorte que la matière thermoplastique recouvre toute la surface de la feuille (7) plus large en débordant de la feuille (8) moins large sur au moins un côté constituant ainsi au moins un bord (17a,17b) longitudinal formé par la feuille (7) plus large recouverte seulement de la matière thermoplastique (11), ledit bord (17a,17b) étant recourbé de manière concave du côté de la feuille (8) moins large.

10. Application de la plaque selon la revendication 9 comme plaque support de transport pour élévateur à fourches, le ou les bords recourbés favorisant l'introduction desdites fourches sous ladite plaque.

## Claims

1. A method for manufacturing plates provided with at least one curved edge, from an extrudate (11) that is hot-extruded between two sheets (7, 8), the whole being then calendered, **characterised in that** two sheets (7, 8) of different widths are used, and that the material is extruded so as to cover substantially the entire surface of the wider sheet (7) by overlapping the narrower sheet (8) on at least one side, thus comprising at least one longitudinal edge (17a, 17b) formed by the wider sheet (7) covered only with the extrudate (11), said edge then curving by natural mechanical constraint, without any other intervention, during manufacture, so as to be concave on the side of the narrower sheet (7).

2. A method of continuous manufacturing according to claim 1, **characterised in that** the two sheets (7, 8) of different widths are sheets unrolled into bands, the whole being transversely cut (15) after the calendering operation.

3. A method of manufacturing according to either of claims 1 or 2, **characterised in that** at least the edge (17a, 17b) formed by the wider sheet (7) covered only with the extrudate (11) is trimmed mechanically (15) to form an even edge and/or to size the final product more precisely.

4. A method of manufacturing according to either of claim 1 or 2, **characterised in that** the two sheets (7, 8) have the same longitudinal central axis so as to form two curved longitudinal edges (17a, 17b).

5. A method of manufacturing according to any one of claims claim 1 to 4, **characterised in that** the calendering is carried out at controlled temperature.

6. A method of manufacturing according to any one of claims 1 to 4, **characterised in that** the whole is cooled (13) by air after calendering.

7. A method of manufacturing according to any one of claims 1 to 5, **characterised in that** the extrudate (11) comes from a thermoplastic mixture.

8. A method of manufacturing according to any one of claims 1 to 6, **characterised in that** the sheets (7, 8) are sheets of strong paper.

9. A plate provided with at least one curved edge, comprising a thermoplastic material core (11) sandwiched between two sheets (7, 8), **characterised in that** one (8) of the sheets is narrower, such that the thermoplastic material covers the entire surface of the wider sheet (7) by overlapping the narrower sheet (8) on at least one side, thus comprising at least one longitudinal edge (17a, 17b) formed by the wider sheet (7) covered only with the thermoplastic material (11), said edge (17a, 17b) being curved so as to be concave on the side of the narrower sheet (8).

10. An application of the plate according to claim 9 as a carrying support plate for a fork-lift truck, the curved edge(s) promoting the insertion of said forks under said plate.

## Patentansprüche

1. Verfahren zum Herstellen von Platten, welche mit wenigstens einem gewölbten Rand versehen sind, ausgehend von einem Extrudat (11), welches zwischen zwei Folien (7, 8) heißextrudiert wird, wobei die Anordnung danach kalandriert wird, wobei das Verfahren **dadurch gekennzeichnet ist, dass** zwei Folien (7, 8) von unterschiedlicher Breite verwendet werden, und dass das Material derart extrudiert wird, dass es im Wesentlichen die gesamte Fläche der breiteren Folie (7) bedeckt, wobei es über den Rand der schmäleren Folie (8) an wenigstens einer Seite hinausgeht, wobei so wenigstens ein Rand (17a, 17b) in Längsrichtung entsteht, welcher durch die breitere Folie (7) gebildet ist, bedeckt ausschließlich mit dem Extrudat (11), wobei der Rand sich so ohne weiteres Eingreifen, durch natürliche mechanische Spannung, im Verlauf der Herstellung konkav an der Seite der weniger breiten Folie (8) wölbt.

2. Verfahren zum kontinuierlichen Herstellen nach Anspruch 1, **dadurch gekennzeichnet, dass** die zwei Folien (7, 8) von unterschiedlicher Breite Folien sind, welche als Bänder abgerollt werden, wobei die Anordnung in Querrichtung in Stücke geschnitten (15) wird, nach dem Vorgang des Kalandrierens.

3. Verfahren nach einem der Ansprüche 1 und 2, **dadurch gekennzeichnet, dass** wenigstens der Rand (17a, 17b), welcher durch die breitere Folie (7) gebildet ist, bedeckt ausschließlich von dem Extrudat (11), mechanisch zugeschnitten (15) wird, zum Bilden eines regelmäßigen Rands und/oder zum genaueren Dimensionieren des fertigen Erzeugnisses.

4. Verfahren zum Herstellen nach einem der Ansprüche 1 oder 2, **dadurch gekennzeichnet, dass** die zwei Folien (7, 8) dieselbe Mittelachse in Längsrichtung aufweisen, derart, dass sie zwei gewölbte Ränder (17a, 17b) in Längsrichtung ausbilden.

5. Verfahren zum Herstellen nach einem der Ansprüche 1 bis 4, **dadurch gekennzeichnet, dass** das Kalandrieren bei geregelter Temperatur ausgeführt wird.

6. verfahren zum Herstellen nach einem der Ansprüche 1 bis 4, **dadurch gekennzeichnet, dass** die Anordnung nach dem Kalandrieren luftgekühlt (13) wird.

7. Verfahren zum Herstellen nach einem der Ansprüche 1 bis 5, **dadurch gekennzeichnet, dass** das Extrudat (11) aus einer Thermoplast-Mischung hergestellt ist.

8. Verfahren zum Herstellen nach einem der Ansprüche 1 bis 6, **dadurch gekennzeichnet, dass** die Folien (7, 8) Folien aus einem Papier von hoher Festigkeit sind.

9. Platte, versehen mit wenigstens einem gewölbten Rand, welche aus einem Kern aus Thermoplast-Material (11) besteht, eingelegt zwischen zwei Folien (7, 8), **dadurch gekennzeichnet, dass** die eine (8) der Folien weniger breit ist, derart, dass das thermoplastische Material im Wesentlichen die gesamte Fläche der breiteren Folie (7) bedeckt, wobei es über den Rand der weniger breiten Folie (8) an wenigstens einer Seite hinausgeht, wobei so wenigstens ein Rand (17a, 17b) in Längsrichtung entsteht, welcher durch die breitere Folie (7) gebildet ist, bedeckt ausschließlich mit dem thermoplastischen Material (11), wobei der Rand (17a, 17b) konkav an der Seite der weniger breiten Folie (8) gewölbt ist.

10. Anwendung der Platte nach Anspruch 9 als Transport-Unterstützungsplatte für Gabel-Hebevorrichtungen, wobei der gewölbte Rand oder die gewölbten Ränder das Einführen der Gabel unter die Platte erleichtert/erleichtern.
